(19) **Europäisches Patentamt**
**European Patent Office**
**Office européen des brevets**

(11) **EP 2 131 998 B1**

(12) **EUROPEAN PATENT SPECIFICATION**

(45) Date of publication and mention
of the grant of the patent:
**17.08.2011 Bulletin 2011/33**

(51) Int Cl.:
***B23Q 3/06*** *(2006.01)*    ***B23Q 11/00*** *(2006.01)*
***B23B 31/30*** *(2006.01)*    ***B25B 5/06*** *(2006.01)*

(21) Application number: **08718606.0**

(22) Date of filing: **05.03.2008**

(86) International application number:
**PCT/GB2008/000745**

(87) International publication number:
**WO 2008/107672 (12.09.2008 Gazette 2008/37)**

(54) **ADAPTIVE DESIGN OF FIXTURE FOR THIN-WALLED SHELL/CYLINDRICAL COMPONENTS**

ADAPTIVE SPANNVORRICHTUNGSAUSFÜHRUNG FÜR DÜNNWANDIGE SCHALEN-/
ZYLINDRISCHE KOMPONENTEN

AGENCEMENT ADAPTATIF DE MONTAGE POUR FIXATIONS DE COMPOSANTS D'ENVELOPPE
CYLINDRIQUES/À PAROI MINCE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **06.03.2007 GB 0704298**

(43) Date of publication of application:
**16.12.2009 Bulletin 2009/51**

(73) Proprietor: **The University Of Sheffield
Sheffield S10 2TN (GB)**

(72) Inventor: **GENG, Zunmin
Nottingham NG8 1JQ (GB)**

(74) Representative: **Lunt, Mark George Francis
Harrison Goddard Foote
Fountain Precinct
Balm Green
Sheffield
S1 2JA (GB)**

(56) References cited:
**GB-A- 1 445 216**    **US-A- 6 015 154**
**US-B1- 6 547 228**

**Description**

This invention relates to an adaptive design of fixture for shell/cylindrical components, for the purpose of enabling them to be machined with sufficient supporting rigidity and dynamic stability, so as to maintain the machining precision and surface finish to an acceptable engineering standard. The invention is particularly applicable to thin-walled components where secure fixture and vibration avoidance during machining is difficult to achieve.

BACKGROUND

According to the theory of structural mechanics, well known to those skilled in the art, shell/cylindrical components are defined as a group of hollow objects with openings, shaped with continuity and curvature. A bowl-like structure characterises a shell component, having a single major opening, whereas a hollow tubular structure having a through-opening characterises a cylindrical component. Both have a wall that has a wall-thickness, and each has a profile-dimension, which is either its radius, if its diameter is larger than its height, or its height otherwise. In terms of the profile-dimension-to-wall-thickness ratio, shell/cylindrical components are classified as:

> a) Very thick-walled: three-dimensionally stressed, as solid structures;
> b) Thick-walled: stretching, bending and higher order transverse shear stressed;
> c) Moderately thick-walled: stretching, bending and first order transverse shear stressed;
> d) Thin-walled: stretching and bending stressed, but transverse shear neglected;
> e) Very thin-walled: dominated by stretching effects, also called as membranes.

Based on this classification, the thin-walled shell/cylindrical components to which the present invention particularly relates are defined as, and limited to, hollow structures with one major opening, or through opening, having:

> a) a finished wall-thickness W of 2 mm or greater;
> b) a shell/cylinder profile-dimension-to-wall-thickness ratio R/W greater than or equal to 20 (where R is the radius or height of the component, whichever of the diameter and height is the profile-dimension); and
> c) a major-opening-radius-to-profile-dimension ratio R1/R of greater than or equal to 0.5, or a major-opening radius R1 of greater than or equal to 200 mm;

wherein there is obvious congestion of less-damped vibration modes in the frequency range of 0 to 1000 Hz; and there is de minimis transverse shear in the wall.

The defined thin-walled shell/cylindrical component may have minor openings and an uneven internal/external surface without changing its character. Such component is difficult to hold while it is machined. The thin wall lacks sufficient static rigidity and dynamic stability to withstand the cutting force generated in the machining process. Through lack of shear effects, the thin wall becomes dynamically unstable and liable to vibrate, causing machining precision problems, mainly from the insufficient supporting rigidity, and surface finish problems, mainly from the unstable self-excited vibration between the cutting-tool and workpiece (called hereafter for simplicity "chatter").

A well-designed static fixture will not help with this situation mainly because, on the one hand, a static fixture precisely fitting most of the shell/cylindrical surface will be expensive and sometimes impossible, and, on the other hand, even if a static fixture is very well designed and fits precisely the at-rest position of a thin-walled component, when excited by the cutting force, the flexible thin wall, mainly maintained by stretching and bending effects, will still deflect around the still position and bounce against the still support, so as to deteriorate the dynamic stability of the component. Design of a dynamic fixture adaptively fitting, supporting and dampening the thin-walled components is obviously a desirable objective.

In any industry, it is undesirable to have waste. Consequently it is always desirable to minimise component mass, provided of course that other factors do not militate against this. For example, there is no purpose in reducing component mass if the component will consequently fail sooner than is desirable, particularly if the mass of the component is not otherwise detrimental to the operation of the component. However, in some industries, component mass is itself a substantial issue and nowhere is this more the case than in the aerospace and defence industries.

Rocket shell and jet engine casing are typical thin-walled shell/cylindrical components. Most of them are made from difficult-to-machine material, such as heat-resistant alloy, and there is always a very strict requirement on removing the unnecessary component mass to the minimum. In order to provide all the precise interfaces for connection, also to remove all the unnecessary mass from a forging or casting part to get a finished component, machining work is inevitable. Holding such a component during the comparatively tougher machining process is problematic, since the thin wall is flexible and dynamically unstable. The currently employed solution by most engineers is to treat the components individually, studying the vibration characteristics of such components and predict problem areas, and then to determine appropriate machining procedures to minimise the effects of chatter.

Nevertheless, the present invention is particularly (although not, by any means, exclusively) concerned with providing an adaptive fixture for holding such a component during the required machining operations, and one that adaptively fits most of the component surface, adaptively supports the component for a higher rigidity, and adaptively dampens the thin wall for a higher stability. Here, 'adaptive' means the capability of self-adaptation both in geometric and dynamic senses.

US-A-6015154 discloses a holder in the form of a metallic sleeve having slots and surrounding a polymeric sleeve sealed at its ends to an arbour so as to define a hydrostatic chamber between the polymeric sleeve and arbour whereby pressurising the chamber expands the sleeves, the metal sleeve gripping and holding internally a cast engine cylinder liner sleeve to permit machining thereof. The metallic sleeve can expand about 8 mm in diameter. Although dampening vibrations is stated as an objective, there is no explanation of how this is provided beyond the holder itself.

US-A-4811962 discloses a similar arrangement, but without the metallic sleeve. The polymeric sleeve in this case comprises a Teflon® shell that, while having some flexibility to permit expansion to grip a cylindrical sleeve internally, has capacity to expand only a few millimetres in diameter and for simply shaped cylinders.

US-A-4253694 discloses an internal pickup device for round products comprising a cylindrical part and elastomeric rings in grooves of the part, the base of which grooves can be pressurised with fluid to expand the elastomer rings to grip the object internally. US-B-6547228 is similar, disclosing pneumatic hoses for gripping a vacuum holding block.

GB-A-1445216 discloses a clamping device for a thin-walled cylindrical object to be trued, comprising a similar arrangement as described in US-A-4253694.

However, even with thick-walled components, a fixture therefor that provides adaptive damping would be advantageous in the search for improved machining performance. Again, in this context, "adaptive" means both capable of fitting components of different sizes and being tailored to suit the dynamic vibration characteristics associated with particular machining operations.

BRIEF SUMMARY OF THE DISCLOSURE

A fixture for fixing thin-walled shell or cylindrical components according to the preamble of appended claim 1

In accordance with the present invention there is provided a fixture according to the appended claim 1.

Preferably, the fixture further comprises a thick- or very thick-walled lid to be fixed to the column and having second location means to locate the other end of the component.

Being thick-walled, the column, base and lid provide structures with at least stretching, bending and higher order transverse shear effects considered, coupled with obvious sparseness of vibration modes in the frequency range of 1000 Hz.

Preferably, said liner has a total thickness between 10 mm and 20 mm, whereby penetrating tool movements through the shell/cylindrical components during a machining operation do not penetrate the pressure element. Preferably, the liner is a multi-layered polymeric/elastomeric material, the layers being adhered or otherwise bonded together. Thus, the liner also serves to spread a uniform supporting pressure, mainly through the shear effects between layers, and dynamic damping, mainly through the polymeric or elastomeric material, normal to the component surface to be machined. Regional enhancements around minor openings of the component are employable by inserting curled nylon sheet inside the outer layer of the liner, against the thin wall to be machined.

Preferably, said pressure element is pneumatically inflated, within a stable and safe working range up to 5 times of its flat diameter and inflating pressure up to 4.0 Bar. Conveniently, it may comprise a modified vehicle wheel inner tube, which is capable of expansion to the required size and very well fitting the enclosure confined within the shell/cylindrical component, supporting arbour or cylinder, mounting base and lid. An inflation valve of the tube may protrude though an aperture provided for this purpose on the internal arbour or external supporting cylinder. Two or more tubes are employable one on top of the other, for long shell/cylindrical components.

In one arrangement, the column is inside the component, the pressure element surrounding the column, the liner surrounding the pressure element, and the component, when the fixture is in use, surrounding the liner, pressure element and column. In this arrangement, the component is pressed radially outwardly by the pressure element and machining operations can be effected on its external surface.

However, in another arrangement, the column is hollow and is outside the component, the pressure element being within the column surrounding the liner which itself surrounds the component, when the fixture is in use. In this arrangement, the component is pressed radially inwardly by the pressure element and machining operations can be effected on its internal surface.

The adaptive fixture design satisfies the demand in advanced manufacturing engineering of an agile and flexible fixture combination adaptable to different products with similar structural functions but different detailed shapes and sizes. An important element in the present invention is the pressure element, particularly when in the form of an expansible pneumatic tube, which is inflatable within a stable and safe working range up to 5 times its flat diameter and inflating pressure up to 4 Bar. Helped by this, the fixture is not only adaptive to fit the detailed shape of the component, but also adaptive to fit a considerable range of component sizes up to around 4 times of a nominated component diameter. Another special advantage from the pneumatic element is that, by providing a pneumatic damping cavity with the fixture, machining chatter energy is absorbed preventing the usual exponential growth of vibration once it begins.

Said internal or external supporting cylinder plays a key role in sustaining sufficient supporting rigidity and dynamic stability to the thin-walled component. Said thin-walled shell/cylindrical components are mainly balanced by stretching and bending stresses and lack shear effects to maintain a global rigidity. Therefore, with this rigid support, the pneumatic element applies a uniform normal pressure through the multi-layered liner onto the thin wall and, adaptively fits the thin-walled surface, with obvious dynamic damping effects.

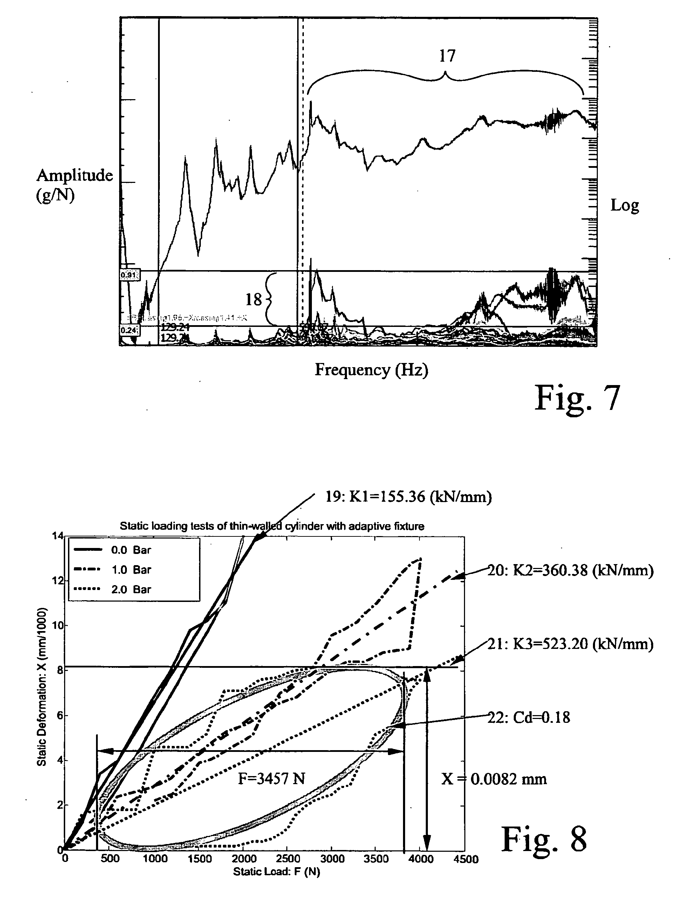

Said adaptive damping includes both the dynamic damping applied by the polymeric or elastomeric material of the said liner on the thin wall, and the energy absorbed by the damping cavity of the pneumatic element (Total Loss-Coefficient: $C_d \geq 0.1$, see below and Figures 7 and 8), which is adaptively contacted with the elastomeric liner and flexible thin-walled components.

More than an individual fixture, this invention presents an adaptive fixture design approach for thin-walled shell/ cylindrical components, for the purpose of enabling them to be machined with sufficient supporting rigidity and dynamic stability, so as to maintain the machining precision and surface finish to an acceptable engineering standard.

The fixture is particularly adapted to thin-walled structures, and of these airplane jet engine casings and rocket nose cones are typical examples. Indeed, the invention further provides a combination of a fixture as defined above and a thin-walled shell/cylindrical component secured in the fixture. Preferably, said component is an airplane jet engine casing or a rocket nose cone.

BRIEF DESCRIPTION OF THE DRAWINGS

Embodiments of the invention are further described hereinafter, by way of example, with reference to the accompanying drawings and figures, in which:

Figure 1     is a perspective view of an internal fixture according to the present invention;

Figure 2     is a sectional view of a thin-walled cylindrical component held in an external fixture according to the present invention;

Figure 3     is a sectional view of a thin-walled shell component with an internal fixture according to the present invention; and

Figure 4     is sectional view of another thin-walled shell component within the external fixture of Figure 2;

Figure 5     is a graph of a Frequency-Response-Function (FRF) ensemble of a thin-walled cylindrical component, measured with shaker excitation, no fixture applied;

Figure 6     is a graph of a Frequency-Response-Function (FRF) ensemble of a thick-walled internal column of a fixture arbour according to the present invention, measured with shaker excitation;

Figure 7     is a graph of Frequency-Response-Function (FRF) ensemble of a thin-walled cylindrical component, measured with shaker excitation, when supported in an adaptive fixture according to the present invention; and

Figure 8     is a graph of static loading test results of a thin-walled cylindrical component supported in adaptive fixture according to the present invention, with different inflation pressures of the pressure element at 0.0, 1.0 and 2.0 Bar.

DETAILED DESCRIPTION

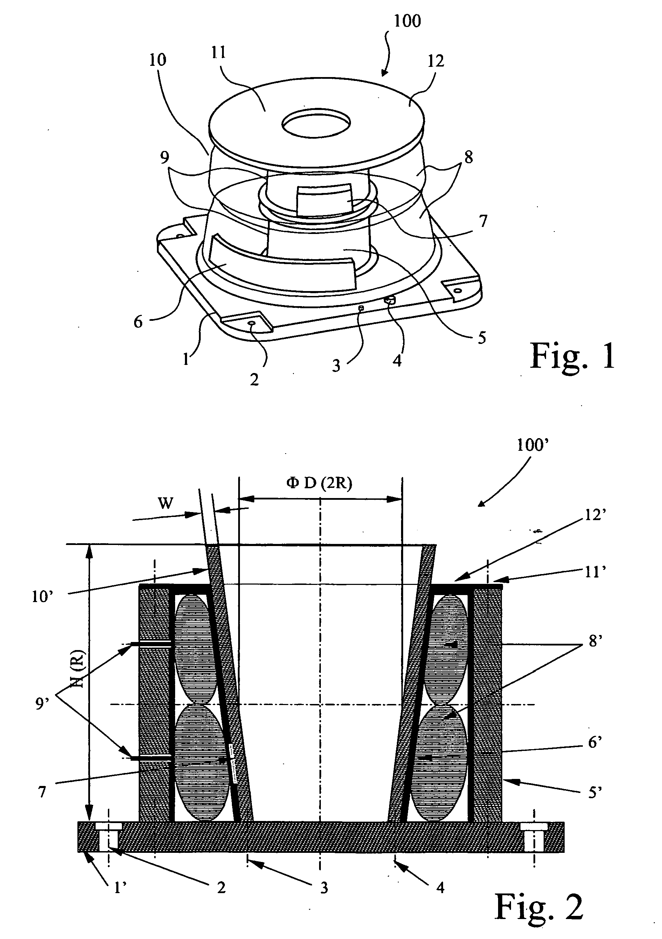

In Figure 1, an internal adaptive fixture 100, for the external machining of a thin-walled cylindrical component 10, comprises a mounting base 1 in the form of a thick-walled plate having mounting holes 2 for connection to the machine table (not shown) of a machining centre (not shown). Positioning pins 3 and clamps 4 locate and clamp the component 10 to the base 1.

A thick-walled rigid arbour or column 5 is fixed centrally of the base 1 by bolts (not shown). The arbour 5 terminates with a flange to connect to a thick-walled lid 12. Two modified vehicle-wheel inner tubes 8, having an internal radius R corresponding with the radius of the arbour 5, are fitted on the arbour. Being made of elastomeric, resiliently flexible material, the tubes 8 can be inflated to fit the enclosure confined within the cylindrical component 10, support arbour 5, mounting base 1 and lid 12. Each tube 8 has its own air inlet valve 9 on its inner surface, and this is fitted through a respective aperture provided for this purpose on the arbour 5. Each inlet valve 9 is extendable upwardly through the arbour, which is hollow.

A multi-layered sacrificial liner 6 comprises 3 to 5 sheets of polymeric or elastomeric material adhered to each other and wrapped around the tubes 8, having a total thickness $\geq 10$ mm, whereby penetrating tool movements through the cylindrical component 10 during a machining operation do not penetrate the pressure element 8. Meanwhile, the liner spreads a uniform supporting pressure, mainly through the shear effects between layers, and provides a dynamic damping, mainly through the polymeric or elastomeric material, normal to the component surface to be machined. Regional enhancements around minor openings (not shown) are employed by inserting curled nylon sheet 7 inside the outer layer of the liner, against the thin wall to be machined.

The lid 12 is a thick-walled circular plate provided with a wedged step (not shown) around its circumference to hold the top end of the cylindrical component. Lid 12 also is provided with holes 11 by which it can be attached to the top end of the internal arbour 5 by bolts (not shown).

In Figure 2 an external adaptive fixture 100' for internal machining of the same thin-walled cylindrical component 10 is illustrated comprising a mounting base 1', similar to that of Figure 1. A thick-walled rigid cylinder 5' is fixed centrally of the base 1' by bolts (not shown) and also terminates with a flange to connect a lid 12'. Two modified vehicle-wheel inner tubes 8' have an external radius R' (corresponding with the internal radius of the cylinder 5) and are inflated to fit the enclosure confined within the cylindrical component 10, supporting cylinder 5', mounting base 1' and lid 12'. Each tube 8' has its own air inlet valve 9' on its outer surface, and this is fitted through a respective aperture 26 provided for this purpose on the cylinder 5.

A multi-layered sacrificial liner 6' is also wrapped around the tubes 8 internally, against the external surface of component 10. Regional enhancements around the minor openings are employed by inserting curled nylon sheet 7' inside the inner layer of the liner 6', against the thin wall to be machined.

The circular lid 12' is fixed on the top end of the external cylinder 5', with a wedged step 38 around its circumference to hold the top end of the component 10 and form an enclosure confined within the cylindrical component 10, supporting cylinder 5', mounting base 1' and lid 12', for the inflatable pneumatic tubes 8'.

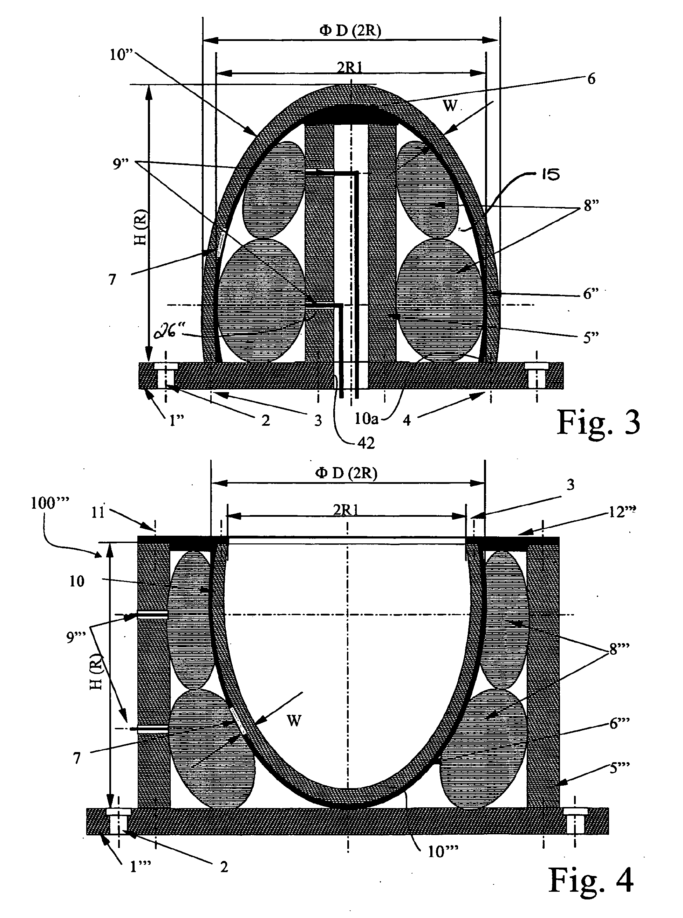

Illustrated in Figure 3 is an internal adaptive fixture 100" for the external machining of a thin-walled shell component 10" with one major opening 10a into an enclosure 15. The fixture 100" comprises a mounting base 1" in the form of a thick-walled plate having mounting holes 2 for the machine table, positioning pins 3 and threaded holes 4 to locate and constrain the shell component 10". In this specific case, no lid is needed for an additional support to the component 10. A thick-walled rigid arbour 5" is fixed centrally of the base 1" by bolts (not shown) and two air inlet valves 9" on the inner surface of pneumatic tubes 8 are fitted through two respective apertures 26" provided for this purpose on the arbour 5". Each inlet valve 9 is extendable downwardly through the hollow walled arbour 5 to extend through an aperture 42 in the plate 1".

A multi-layered sacrificial liner 6" is also wrapped around the tubes 8 externally, against the internal surface of the shell component 10 for external machining. Regional enhancements around the minor openings are employed by inserting curled nylon sheet 7 inside the outer layer of the liner 6", against the thin wall to be machined.

In Figure 4 an external adaptive fixture 100''' for internal machining of the same thin-walled shell component 10 is illustrated comprising a mounting base 1''' in the form of a thick-walled plate having mounting holes 2 for the machine table (not shown). A thick-walled rigid cylinder 5''' is fixed centrally of the base 1''' by bolts (not shown). The cylinder 5''' terminates with a flange to connect to a lid 12''' by bolts 11. Two modified vehicle-wheel inner tubes 8''' have an external radius corresponding with the internal radius of the cylinder 5''' and are inflated to fit the enclosure confined within the shell component 10''', support cylinder 5''', mounting base 1''' and lid 12'''. Each tube 8''' has its own air inlet valve 9''' on its outer surface, and this is fitted through a respective aperture provided for this purpose on the cylinder 5'''.

A multi-layered sacrificial liner 6''' is also wrapped around the tubes 8''' internally, against the external surface of the shell component 10''' for internal machining. Regional enhancements around the minor openings are employed by inserting curled nylon sheet 7 inside the inner layer of the liner 6''', against the thin wall to be machined.

Component 10 in the drawings, (and hereafter use of a numeral includes its equivalent structure 10',10",10''') may comprise a rocket shell or a jet engine casing. Most rough parts of thin-walled rocket shell or jet engine casings are monolithic castings or forgings from difficult-to-machine material, such as heat-resistant alloy. There is always a very strict requirement on reducing unnecessary component mass to a minimum. In order to provide all the precise interfaces for connection, as well as to remove all the unnecessary mass from the forging or casting part to get a finished component, machining work is inevitable. By applying an adaptive fixture of the type illustrated in Figure 1 to 4, the rough part 10 can be machined.

The internal supporting arbour or external supporting cylinder 5 plays a key role in sustaining sufficient supporting rigidity and dynamic stability to the thin-wall. The thin-walled shell/cylindrical components 10 are mainly balanced by the stretching and bending stresses and lack of shear effects to maintain a global rigidity. Therefore, the arbour or cylinder 5 is made as thick-walled as defined above. With this rigid support, the pneumatic element 8 applies a uniform normal pressure through the multi-layered liner 6 onto the thin wall and adaptively fits the thin-walled surface with dynamic damping effects.

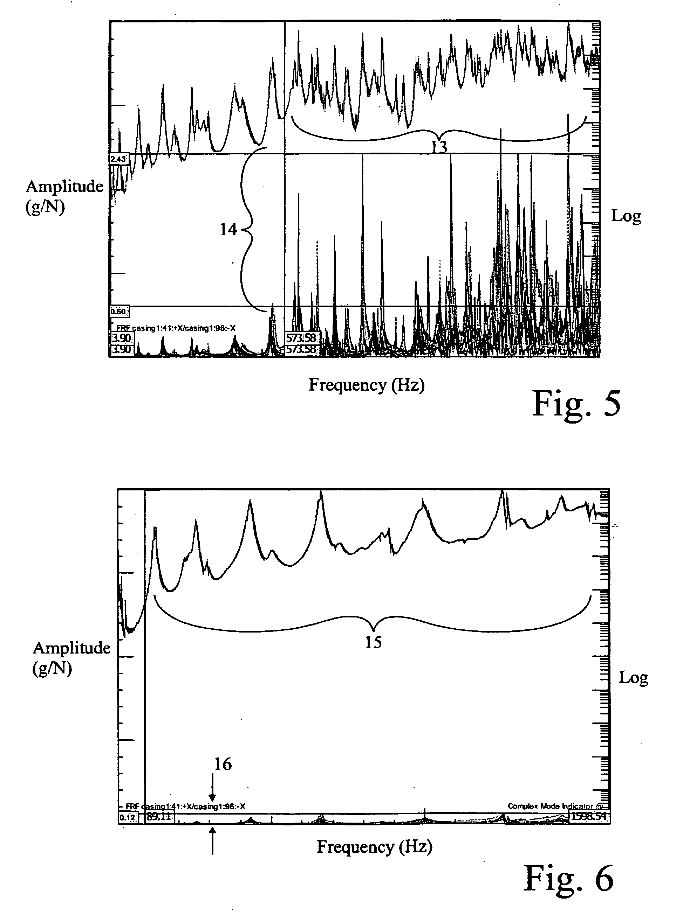

Said adaptive damping includes both the dynamic damping applied by the polymeric or elastomeric material of the said liner 6 on the thin wall, and the energy absorbed by the damping cavity of the pneumatic element 8. Validation of this adaptive damping effect is explored below with reference to Figures 5 to 8.

Figure 5 demonstrates a Frequency-Response-Function (FRF) ensemble of the thin-walled cylindrical component 10 shown in Figure 1, measured with shaker excitation and no fixture applied. From the logarithmic expression of the curve above, an obvious congestion of vibration modes 13, identified as a group of congested peaks on the curve, is observed within the frequency range around 1000 Hz. From the linear expression of the curve below, irregular and reverberant less-damped vibration amplitudes 14 ($H_{max1}$ = 2.43 g/N, in this case) are observed within the same frequency range. These are typical dynamic characteristics of thin-walled shell/cylindrical components, as defined.

Figure 6 demonstrates a Frequency-Response-Function (FRF) ensemble of the thick-walled arbour 5 shown in Figure 1, measured with shaker excitation. From the logarithmic expression of the curve above, an obvious sparseness of vibration modes 15 exists, identified as countable sparsely-distributed peaks on the curve, within the frequency range around 1000 Hz. From the linear expression of the curve below, regular and small vibration amplitudes 16 ($H_{max2}$ = 0.12 g/N, representing a high rigidity in this case) are observed within the same frequency range. These are typical dynamic characteristics of thick-walled components, as defined.

Figure 7 demonstrates a Frequency-Response-Function (FRF) ensemble of the same thin-walled cylindrical component 10 shown in Figure 1, measured with shaker excitation, but wherein the adaptive fixture 100 of the present invention is applied, with inflation pressure set as 2.0 Bar. From the logarithmic expression of the curve above, an irregular but obvious sparseness of vibration modes 17, identified as countable sparsely-distributed peaks on the curve, is observed within the frequency range around 1000 Hz. From the linear expression of the curve below, irregular but heavy-damped vibration amplitudes 18 ($H_{max3}$ = 0.91 g/N, in this case) are observed within the same frequency range.

Vibration-Amplitude-Ratio between the thin-walled component 10 with fixture shown in Figure 7, and without fixture shown in Figure 5 is identified as: $R_H = H_{max3} / H_{max1} = 2.67$. As a validation criterion, the Vibration-Amplitude-Ratio should be in the range of $R_H \geq 2.5$, for all the thin-walled shell/cylindrical components with the fixture applied, as defined.

Figure 8 demonstrates a set of static loading test results respectively from the same thin-walled cylindrical component 10 with adaptive fixture applied, as shown in Figure 1. These are in terms of pneumatic tubes 8 inflated with pressure set as 0.0, 1.0 and 2.0 Bar. Applying an up-and-down circular point-load F on the external surface around the middle section of the cylindrical component 10 (within its buckling limit) and measuring the static deflection X at the same point, a set of average supporting rigidity to the thin wall are identified as,

$$19: K_1 = \sum \frac{F}{X} = 155.36 \ kN / mm \ ,$$

$$20: K_2 = \sum \frac{F}{X} = 360.38 \ kN / mm$$

and

$$21: K_3 = \sum \frac{F}{X} = 523.20 \ kN / mm \ ,$$

corresponding to the respective inflation pressures 0.0, 1.0 and 2.0 Bar. Increase of the Supporting-Rigidity-Ratio from a transitional stage $K_d = \dfrac{K_2}{K_1} = 2.32$ up to a stable stage (identified with the elliptic hysteretic loop 22, as stated below) $K_d = \dfrac{K_3}{K_1} = 3.43$ , demonstrates the effectiveness of the adaptive fixture in support of the thin-walled component 10. As a validation criterion, the Supporting-Rigidity-Ratio should be in the range of $K_d \geq 3.0$, for all the thin-walled shell/cylindrical components with the fixture applied, as defined.

Also from Figure 8, with the inflation pressure increased from 0.0, 1.0 up to 2.0 Bar, an elliptical-shaped hysteretic loop 22 is gradually identified. Dividing the area $A_d$ of the identified ellipse enclosure 22 by the maximum potential energy $U_d$ calculated from 21: K3, the adaptive damping effect from the fixture is identified as the Loss-Coefficient: 22:

$$C_d = \frac{A_d}{2\pi U_d} = 0.18$$ . Loss-Coefficient $C_d$ is a general measure for complicated damping effects from engineering structures or materials, statistically, for general thin-walled metallic structure, $C_d \leq 0.001$, and for thin-walled metallic structure with adhered polymeric or elastomeric damping layer, $0.01 \leq C_d \leq 0.1$. As a validation criterion on the effectiveness of the adaptive fixture related to this invention, Loss-Coefficient should be in the range of $C_d \geq 0.1$, for all the thin-walled shell/cylindrical components with the fixture applied, as defined.

More than an individual fixture, this invention presents an adaptive fixture design approach for thin-walled shell/cylindrical components, for the purpose of enabling them to be machined with sufficient supporting rigidity and dynamic stability, so as to maintain the machining precision and surface finish to an acceptable engineering standard.

Design and validation procedure of the adaptive fixture for different sized thin-walled shell/cylindrical components 10, as defined with the invention, is concluded below:

(1). Confirmation of the thin-walled 10 and thick-walled 5 components.

    a). By geometric dimensions: As defined.
    b). By dynamic characteristics: As defined, see Figure 5 and 6.

(2). Validation of dynamic stability and adaptive damping of the thin-walled components 10, with adaptive fixture applied.

    a). By dynamic characteristics: See Figure 5 and 7.
    Regulating the inflation pressure for the pneumatic elements 8 within a safe working range of 4.0 Bar, then performing a FRF ensemble test with shaker excitation as illustrated in Figure 5 and 7. As a validation criterion of dynamic stability and adaptive damping effects, the Vibration-Amplitude-Ratio should be in the range of $R_H \geq 2.5$ and obvious sparseness of vibration modes 17 should be observed within the frequency range of 1000 Hz, for all the thin-walled shell/cylindrical components with the fixture applied, as defined.
    b). By static loading tests: See Figure 8.
    Also as a validation criterion of the adaptive damping effects, an elliptical-shaped hysteretic loop 22 should be observed from the static loading test illustrated in Figure 8, and the identified Loss-Coefficient should be in the range of $C_d \geq 0.1$, for all the thin-walled shell/cylindrical components with the fixture applied, as defined.

(3). Validation of adaptive supporting rigidity: See Figure 8.
    Regulating the inflation pressure for the pneumatic elements 8 within a safe working range of 4.0 Bar, then performing a static loading test as illustrated in Figure 8. As a validation criterion of adaptive supporting rigidity, the Supporting-Rigidity-Ratio should be in the range of $Kd \geq 3.0$, for all the thin-walled shell/cylindrical components with the fixture applied, as defined.

Although described above in relation to thin-walled components, the fixture of the present invention is not limited thereto but can be applied to thick-walled components with advantage. Not only is the fixture adaptive in the sizes of component it can accommodate, but also it is adaptive in its vibration damping characteristic by virtue of the pneumatic pressure.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example as defined by the appended claims

All of the features disclosed in this specification (including any accompanying claims, abstract and drawings), and/or all of the steps of any method or process so disclosed, may be combined in any combination, as defined by the appended claims

Each feature disclosed in this specification (including any accompanying claims, abstract, drawings and testing results), may be replaced by alternative features serving the same, equivalent or similar purpose, as defined by the appended claims. Thus, unless expressly stated otherwise, each feature disclosed is one example only of a generic series of equivalent or similar features as defined by the appended claims.

**Claims**

1. A fixture (100) for fixing thin-walled shell or cylindrical components (10) having a thin wall to be machined, the fixture comprising:

   a thick- or very thick-walled base (1)
   a thick- or very thick-walled column (5) fixed in the base (1) and
   a pressure element (8) disposed on the base (1) between the column (5) and, when in use, the component (10)
   and a sacrificial liner (6,7) adapted to fit between the pressure element (8) and component (10)
   **characterised in that**
   the fixture (100) is adaptive, and in which the pressure element (8) is an endless tube which is pneumatically inflatable and capable of inflation up to five times its flat diameter,; and the base (1) has first location means (3,4) to locate and clamp one end of the component to the base (1).

2. A fixture as claimed in claim 1,
   in which the fixture further comprises a thick- or very thick-walled lid (12) to be fixed to the column and having second location means to locate the other end of the component (10); and/or
   in which said location means comprises positioning pins (3) and clamps (4) for the thin-walled component.

3. A fixture as claimed in claim 1 or 2,
   in which said liner (6) has a total thickness between 10 mm and 20 mm, whereby penetrating tool movements through the shell/cylindrical components during a machining operation do not penetrate the pressure element; and/or
   in which the liner (6) is a multi-layered polymeric/elastomeric material, the layers being adhered or otherwise bonded together; and/or
   in which regional enhancements (7) of the liner are provided in areas where minor openings of the component are to be situated, said enhancements comprising curled nylon sheets inserted inside an outer layer of the liner (6), against the thin wall to be machined; and/or
   in which said sacrificial liner (6) comprises a rectangular sheet of nylon curled into a tubular shape and fitted inside the component outside of the pressure element.

4. A fixture as claimed in claim 3, in which there are between 4 and 7 sheets of material in said liner (7).

5. A fixture as claimed in claim 1, wherein said pressure element (8) is pneumatically inflated at an inflating pressure up to 4 Bar.

6. A fixture as claimed in any preceding claim mounting said component, which component comprises one of a rocket shell (10",10''') or an airplane jet engine casing (10,10').

7. A fixture as claimed in any preceding claim, wherein said supporting column (5",5''') is hollow.

8. A fixture as claimed in any preceding claim, wherein said pressure element comprises a vehicle wheel inner tube, preferably wherein an inflation valve (9",9''') of the tube protrudes though an aperture provided for this purpose in the column.

9. A fixture as claimed in claim 8, wherein two or more of said tubes are employed one on top of the other.

10. A method of validating a fixture as claimed in any preceding claim, in which:

    the inflation pressure for the pressure element is regulated within a range up to 4 Bar;
    a FRF ensemble test is performed with shaker excitation; and
    the Vibration-Amplitude-Ratio is in the range of $R_H \geq 2.5$, with obvious sparseness of vibration modes observed within the frequency range of 1000 Hz.

11. A method as claimed in claim 10, wherein said validation procedure further comprises a static loading test in which an elliptical-shaped hysteretic loop is observed and the identified Loss-Coefficient is in the range of $C_d \geq 0.1$.

**12.** A method as claimed in claim 10 or 11, wherein said validation procedure further comprises a static loading test in which the Supporting-Rigidity-Ratio is in the range of $K_d \geq 3.0$.

**13.** A combination of a fixture as claimed in any of claims 1 to 9, and a thin-walled shell or cylindrical component secured in the fixture.

**14.** A combination as claimed in claim 13, in which the component is an airplane jet engine casing or a rocket nose cone.

**Patentansprüche**

**1.** Befestigungsvorrichtung (100) zur Befestigung dünnwandiger Gehäuse- oder zylindrischer Komponenten (10) mit einer dünnen zu bearbeitenden Wand, wobei die Befestigungsvorrichtung folgendes umfasst:

eine dick- oder sehr dickwandige Basis (1);
ein Druckelemente (8), das an der Basis (1) zwischen der Säule (5) und, im Einsatz, der Komponente (10) angeordnet ist; und
eine Deformationsbuchse (6, 7), die zwischen das Druckelement (8) und die Komponente (10) passt;
**dadurch gekennzeichnet, dass**
die Befestigungsvorrichtung (100) adaptiv ist, und wobei es sich bei dem Druckelement (8) um einen Endlosschlauch handelt, der pneumatisch gefüllt werden kann und der auf das bis zu Fünffache ihres flachen Durchmessers gefüllt werden kann; und wobei die Basis (1) eine erste Positionierungseinrichtung (3, 4) aufweist, um ein Ende der Komponente an der Basis (1) zu positionieren und zu klemmen.

**2.** Befestigungsvorrichtung nach Anspruch 1,
wobei die Befestigungsvorrichtung ferner einen dick- oder sehr dickwandigen Deckel (12) zur Befestigung an der Säule umfasst, und mit einer zweiten Positionierungseinrichtung zur Positionierung des anderen Endes der Komponente (10); und/oder
wobei die Positionierungseinrichtung Positionierungsstifte (3) und Klammern (4) für die dünnwandige Komponente umfasst.

**3.** Befestigungsvorrichtung nach Anspruch 1 oder 2,
wobei die Buchse (6) eine Gesamtdicke zwischen 10 mm und 20 mm aufweist, wobei Bewegungen eines penetrierenden Werkzeugs durch die Gehäuse/zylindrischen Komponenten während einem Bearbeitungsvorgang nicht das Druckelement penetrieren; und/oder
wobei die Buchse (6) aus einem mehrlagigen polymeren/elastomeren Material besteht, wobei die Lagen aneinander kleben oder anderweitig miteinander verbunden sind; und/oder
wobei regionale Anreicherungen (7) der Buchse in Bereichen bereitgestellt sind, in denen kleine Öffnungen der Komponente angeordnet werden sollen, wobei die genannten Anreicherungen wellige Nylonlagen umfassen, die in eine äußere Lage der Buchse (6) eingeführt sind, an der zu bearbeitenden dünnen Wand; und/oder
wobei die genannte Deformationsbuchse (6) eine rechteckige Nylonlage umfasst, zu einer röhrenförmigen Form gekräuselt und eingepasst in die Komponente außerhalb des Druckelements.

**4.** Befestigungsvorrichtung nach Anspruch 3, wobei in der genannten Buchse (7) zwischen 4 und 7 Materiallagen vorhanden sind.

**5.** Befestigungsvorrichtung nach Anspruch 1, wobei das genannte Druckelement (8) mit einem Fülldruck von bis zu 4 Bar pneumatisch gefüllt wird.

**6.** Befestigungsvorrichtung nach einem der vorstehenden Ansprüche, wobei die genannte Komponente befestigt wird, wobei die Komponente ein Raketengehäuse (10", 10''') oder ein Strahltriebwerksgehäuse (10, 10') eines Flugzeugs umfasst.

**7.** Befestigungsvorrichtung nach einem der vorstehenden Ansprüche, wobei die genannte tragende Säule (5", 5''') hohl ist.

**8.** Befestigungsvorrichtung nach einem der vorstehenden Ansprüche, wobei das genannte Druckelement einen Innenschlauch eines Fahrzeugreifens umfasst, wobei vorzugsweise ein Füllventil (9", 9''') des Schlauchs durch eine zu diesem Zweck in der Säule vorgesehenen Öffnung vorsteht.

9. Befestigungsvorrichtung nach Anspruch 8, wobei zwei oder mehr der genannten Schläuche jeweils übereinander eingesetzt werden.

10. Verfahren zum Validieren einer Befestigungsvorrichtung nach einem der vorstehenden Ansprüche, wobei:

   der Inflationsdruck für das Druckelement innerhalb eines Bereichs von bis zu 4 Bar geregelt wird;
   ein FRF-Anordnungstest mit Vibrationserregung ausgeführt wird;
   das Vibrations-Amplituden-Verhältnis im Bereich von $R_H \geq 2,5$ liegt, wobei innerhalb des Frequenzbereichs von 1000 Hz eine offensichtliche Knappheit von Vibrationsmodi beobachtet wird.

11. Verfahren nach Anspruch 10, wobei das genannte Validierungsverfahren ferner einen statischen Lasttest umfasst, bei dem eine elliptische Hystereseschleife beobachtet wird, und wobei der identifizierte Verlustkoeffizient im Bereich von $C_d \geq 0,1$ liegt.

12. Verfahren nach Anspruch 10 oder 11, wobei das genannte Validierungsverfahren ferner einen statischen Lasttest umfasst, wobei das Stütz-Steifigkeits-Verhältnis im Bereich von $K_d \geq 3,0$ liegt.

13. Kombination aus einer Befestigungsvorrichtung nach einem der Ansprüche 1 bis 9 und einem dünnwandigen Gehäuse oder einer zylindrischen Komponente, das bzw. die in der Befestigungsvorrichtung gesichert ist.

14. Kombination nach Anspruch 13, wobei es sich bei der Komponente um ein Strahltriebwerksgehäuse eines Flugzeugs oder einen Kegel einer Raketenspitze handelt.


**Revendications**

1. Montage (100) pour fixer des composants à enveloppe à paroi mince ou cylindriques (10) ayant une paroi mince à usiner, le dispositif comprenant :

   une base à paroi épaisse ou très épaisse (1) ;
   une colonne à paroi épaisse ou très épaisse (5) fixée dans la base (1) ; et
   un élément de pression (8) disposé sur la base (1) entre la colonne (5) et, en utilisation, le composant (10) et
   un revêtement sacrificiel (6, 7) adapté pour se loger entre l'élément de pression (8) et le composant (10) ;
   **caractérisé en ce que** :

   le montage (100) est adaptatif, et dans lequel l'élément de pression (8) est un tube sans fin qui peut être gonflé de manière pneumatique et est capable de gonfler jusqu'à cinq fois son diamètre à plat, et la base (1) a des premiers moyens de localisation (3, 4) pour localiser et serrer une extrémité du composant sur la base (1).

2. Montage selon la revendication 1,
   dans lequel le montage comprend en outre un couvercle à paroi épaisse ou très épaisse (12) à fixer à la colonne et ayant des seconds moyens de location pour localiser l'autre extrémité du composant (10) ; et/ou
   dans lequel lesdits moyens de localisation comprennent des broches de positionnement (3) et des pinces (4) pour le composant à paroi mince.

3. Montage selon la revendication 1 ou 2,
   dans lequel ledit revêtement (6) a une épaisseur totale comprise entre 10 mm et 20 mm, moyennant quoi les mouvements de l'outil pénétrant à travers les composants à enveloppe/cylindriques pendant une opération d'usinage ne pénètrent pas dans l'élément de pression ; et/ou
   dans lequel le revêtement (6) est un matériau polymère/élastomère multicouche, les couches étant collées ou autrement liées entre elles ; et/ou
   dans lequel des améliorations régionales (7) du revêtement sont apportées dans des zones où des ouvertures mineures du composant doivent être situées, lesdites améliorations comprenant des feuilles de nylon ondulé insérées à l'intérieur d'une couche externe du revêtement (6), contre la paroi mince à usiner ; et/ou
   dans lequel ledit revêtement sacrificiel (6) comprend une feuille rectangulaire de nylon enroulée dans une forme tubulaire et placée à l'intérieur du composant à l'extérieur de l'élément de pression.

4. Montage selon la revendication 3, dans lequel il y a entre 4 et 7 feuilles de matériau dans ledit revêtement (7).

5. Montage selon la revendication 1, dans lequel ledit élément de pression (8) est gonflé de manière pneumatique à une pression de gonflage maximale de 4 bars.

6. Montage selon l'une quelconque des revendications montant ledit composant, lequel composant comprend l'un d'une enveloppe de fusée (10", 10''') ou d'un carter de moteur d'avion à réaction (10, 10').

7. Montage selon l'une quelconque des revendications précédentes, dans lequel la colonne de support (5", 5''') est creuse.

8. Montage selon l'une quelconque des revendications précédentes, dans lequel ledit élément de pression comprend un tube interne de roue de véhicule, de préférence dans lequel une valve de gonflage (9", 9''') du tube fait saillie à travers une ouverture prévue à cet effet dans la colonne.

9. Montage selon la revendication 8, dans lequel deux ou plusieurs desdits tubes sont utilisés l'un sur l'autre.

10. Procédé de validation d'un montage selon l'une quelconque des revendications précédentes, dans lequel :

   la pression de gonflage de l'élément de pression est régulée dans une plage allant jusqu'à 4 bars ;
   un test d'ensemble FRF est effectué avec l'excitation d'un agitateur secoueur ; et
   le rapport vibration-amplitude se trouve dans la plage de $R_H \geq 2,5$, avec une parcimonie évidente des modes de vibration observée au sein de la plage de fréquences de 1000 Hz.

11. Procédé selon la revendication 10, dans lequel ladite procédure de validation comprend en outre un essai de chargement statique dans lequel une boucle d'hystérésis de forme elliptique est observée et le coefficient de perte identifié est de l'ordre de $C_d \geq 0,1$.

12. Procédé selon la revendication 10 ou 11, dans lequel ladite procédure de validation comprend en outre un essai de chargement statique dans lequel le rapport supportage/rigidité est de l'ordre de $Kd \geq 3,0$.

13. Combinaison d'un montage selon l'une quelconque des revendications 1 à 9 et d'un composant à enveloppe à paroi mince ou cylindrique fixé dans le montage.

14. Combinaison selon la revendication 13, dans lequel le composant est un carter de moteur d'avion à réaction ou un cône de nez de fusée.

Fig. 1

Fig. 2

Fig. 3

Fig. 4

Fig. 5

Fig. 6

**Fig. 7**

19: K1=155.36 (kN/mm)

20: K2=360.38 (kN/mm)

21: K3=523.20 (kN/mm)

22: Cd=0.18

X = 0.0082 mm

F=3457 N

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6015154 A
- US 4811962 A
- US 4253694 A
- US 6547228 B
- GB 1445216 A